# EUROPEAN PATENT SPECIFICATION

(11) **EP 0 639 129 B1**
(45) Date of publication and mention of the grant of the patent: **07.11.2001**
(21) Application number: 93906732.8
(22) Date of filing: 23.03.1993
(51) Int. Cl.: B62B 7/02

(54) **IMPROVED INFANT PUSH-CHAIR**
VERBESSERTER KINDERWAGEN
AMELIORATIONS APPORTEES A UNE POUSSETTE POUR ENFANT

(30) Priority: 23.03.1992 GB 9206271
(43) Date of publication of application: 22.02.1995
(73) Proprietor: OCKWELL, Andrew, London W2 4BH (GB)
(72) Inventor: OCKWELL, Andrew, London W2 4BH (GB)
(74) Representative: Whitaker, Iain Mark
(86) International application number: GB9300595
(87) International publication number: WO9318955

(56) References cited:
- CA-A- 1 209 166
- DE-A- 3 519 088
- FR-A- 951 157
- FR-A- 2 335 384
- US-A- 1 327 864
- US-A- 1 429 966
- US-A- 3 229 990

## Description

### Field of the Invention

The present invention relates to push-chairs for infants.

### Background to the Invention

Conventionally push-chairs/buggys are mounted on four wheels, or four pairs of wheels, at the corners of a substantially rectangular base. This arrangement has the benefit of providing a stable vehicle which is fairly light in weight and fairly compact when folded. However, it has the severe drawback of being only suitable for use on smooth surfaces such as tarmac. The small wheels follow surface ruts and balk at small stones.

A further drawback of conventional push-chairs is their limited manoeuvrability. The push-chairs are generally either provided with swivel-mounted front wheels to facilitate turning but to the detriment of linear movement or the front wheels do not have the capacity to swivel and, therefore, the operator of the push-chair must tilt the push-chair rearwardly to raise the front wheels off the ground and pivot the push-chair laterally on the rear two wheels. In the latter case, conventional push-chair design gives an awkward weight distribution that represents a substantial burden to the operator when tilting the push-chair.

Over many years of design development the configuration of the push chair has altered little in essence. Push-chairs do now exist having a tricycle configuration but these have a centralized centre of gravity and, therefore, fails to address the principle short-coming of existing push-chair design.

In the field of go-cart design it has long ago been proposed to provide a mobile infant's chair of which the centre of gravity of the occupied chair overlies a central coaxial series of axles carrying the main wheels of the go-cart, as described in US 1, 429,966. Such a go-cart lacks, however, the benefits of a pushchair and is limited in its manoeuvrability.

Furthermore, pushchairs such as that described in US 3, 229 990, over which the present invention is characterised also lack good manoeuvrability.

### Summary of the Invention

According to the present invention there is provided a push-chair for infants which comprises:
a frame (1), having a seat (29) for a child, substantially rigidly mounted on one or more main load-bearing wheels (2, 2'), in use, the or each said main wheel being mounted rollably to a primary axle (3), the push-chair being adapted such that the centre of gravity of the occupied push-chair lies substantially over said primary axle, at least during horizontal travel when the child occupant remains seated substantially upright, and the push-chair having one or more front and/or rear stabilisers (8, 9, 9') to prevent over-tilting of the push-chair about the said primary axle the seat being positioned or positionable to face forwardly in the direction of travel, the push chair having a handle stem (5, 5') extending rearwardly in use and when at rest, the handlestem having one or more handle grips for gripping by the operator with their two hands spaced widely apart, characterised in that the or each said main wheel may alternatively by mounted to a coaxial series of axles extending transversely of the push-chair, and in that the or each said front and/or rear stabiliser(s) has a secondary axle or coaxial series of axles with one or more wheels or rollers (10, 32) thereon, and the stabiliser(s) and the axle(s) and wheels or rollers of the stabiliser(s) are adapted to enable the push-chair to be pivoted about said secondary axle(s) of the or each stabiliser thereby to climb a kerb.

With this arrangement the pushchair can be balanced on the primary axle load-bearing wheels and moved forwardly and turned, and manoeuvred to climb kerbs or other obstructions using the secondary axle wheels as desired, with much less effort than conventional push-chairs.

Preferably the main wheels of the push-chair have a diameter, including thickness of tyre (where present) greater than 15 cm, and, more preferably, between 17 cm and 25 cm.

Preferably the push-chair is provided with a handle stem which extends substantially radially relative to the axle or series of axles.

Advantageously the handle stem has a handle at the extremity thereof which provides at least two different hand positions, one for level forward movement and another for tilted forward movement to lever the main load-bearing wheels over a kerb or similar obstruction. The handle may be looped or may be adjustable.

Preferably the seat joins to the handle stem proximate the axle or series of axles.

Preferably an inner angle of greater than 90 degrees but less than 140°, and even more preferably greater than 120° is subtended between the base of the seat and the handle shaft.

The stabilisers may be arranged so as not to contact the ground during substantially horizontal forward travel. Alternatively, with the stabilisers in ground contact during forward travel they may provide a subsidiary supportive role, reducing or negating the effort required by the operator to support the push-chair. This latter feature may be especially useful where the push-chair has a single main wheel. In such case a pair of rear stabilisers extending to form a tripod, or tricycle, arrangement are suitably provided.

A further and very important function of any stabilizers is to provide a prop by means of which the seat may be held substantially upright when at rest. To further assist this, the push-chair is suitably adapted such that the centre of gravity of the occupied push-chair is offset forwardly, or, preferably, rearwardly of said axle or series of axles to bias the push-chair to rest on the prop when the push-chair is not being held by the operator.

In a preferred arrangement the push-chair has a pair of main load-bearing wheels and at least a pair of front stabilizer wheels or a front stabilizer roller.

The push-chair may be adapted to have a child's car safety seat detachably mounted thereto, in use.

The seat may be mounted to the frame by a height-adjustable mounting which may incorporate shock absorbing means.

The height adjustable mounting may comprise a gas strut. Preferably means are provided to releasably lock the seat at or about a selected height.

The push-chair may have a trailer hingedly mounted to the main axle of the push-chair or to the handle shaft. Suitably the trailer is hinged to the axle or handle shaft such as to lie substantially centrally along the axle enabling the trailer to swivel laterally in the direction of movement of the push-chair, in use.

The push-chair may have a seat formed as a tub to substantially enclose at least the lower body of a push-chair occupant.

### Brief Description of the Drawings

Preferred embodiments of the present invention will now be more particularly described, by way of example, with reference to the accompanying drawings, wherein:
Figure 1 is a schematic perspective view of a push-chair embodying the present invention but not showing the seat;
Figure 2 is a schematic side elevation of the push-chair of Figure 1;
Figure 3 illustrates a second embodiment of the present invention;
Figure 4 illustrates a further embodiment of the present invention;
Figures 5 and 6 are perspective and side elevations, respectively, of a yet further embodiment of the present invention which incorporate a trailer for transport of goods;
Figure 7 is a view similar to that of Figure 6 showing a small modification of the Figure 6 embodiment;
Figures 8, 9 and 10 are side elevations of further embodiments of the present invention, which each illustrate variants of a push-chair having a tub form of seating facility;
Figures 11 to 13 are side elevation views of a yet further, particularly preferred, embodiment of the present invention;
Figure 14 is a perspective view from the rear of the push-chair of figures 11 to 13; and
Figures 15 and 16 are, respectively, schematic side elevations and plan views of the configuration of the embodiment of figures 11 to 14.

### Description of the Preferred Embodiments

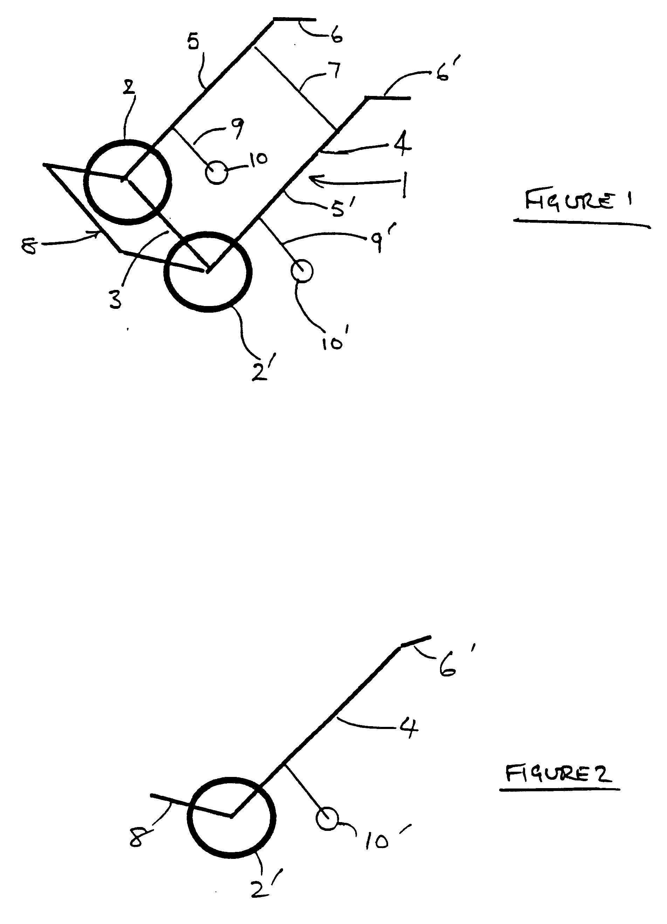

Referring to Figures 1 and 2, a push-chair is shown which comprises a frame 1 mounted on a pair of main wheels 2, 2' which have an axle 3 extending there between. The frame 1 comprises a handle stem 4 pivotally mounted to the axle 3 extending radially thereof, the handle stem 4 comprising a pair of parallel rods 5, 5' spaced apart axially along the axle 3. Each rod 5, 5' terminates in a handle grip 6, 6'. The handle-ward ends of the rods 5, 5' of the handle stem 4 are inter-connected by a strut 7 to form a rigid square structure comprising the axle 3, rods 5, 5' and strut 7. This square structure provides a back to the frame 1.

A forwardly, in use, projecting shelf framework 8 is provided by a set of three rods. The shelf 8 is pivotally mounted to the axle 3 extending substantially radially therefrom and rigidly connected to the rods 5, 5' of the back to subtend an angle of 100 degrees between the shelf and the handle stem 4.

A seat (not shown) which may suitably be a child car safety seat, is removably or integrally secured to the frame 1 with the base of the seat resting upon or integral with the framework of the shelf 8 and the back of the seat adjacent the handle stem 4 and lying over the axle 3. The back of the seat is suitably spaced slightly forwardly of the handle stem 4 at its uppermost, in use, end such that the seat and occupant are not reclined at as great an angle as the handle stem 4, and the seat back is kept broadly upright.

The absence of any support legs separating the base of the seat resting upon the shelf 8 from the axle 3 brings the centre of gravity of the occupied chair into close proximity above the axle 3. The effect of this is that the effort which needs to be applied at the handle grips 6, 6' to support the push-chair about the axle 3 and to move the load forwardly over loose or rough ground or when turning is substantially reduced. This provides a significant advantage, particularly, for example, when the push-chair must be driven across uneven terrain. The provision of wheels 2, 2' of diameter, including tyre thickness, of 20 cm improves the ability of the push-chair to ride over bumps in the terrain and raises the axle 3 from the ground providing a substitute for the legs of conventional push-chairs and thereby enabling the seat of the push-chair to be lowered farther into proximity with the axle 3.

Because of the possible instability of the push-chair design provision of safety features to prevent over-tilting of the chair are highly advisable, and necessary for the push-chair to meet stringent national safety regulations, including, for the UK, BS7409. In the embodiment illustrated in Figures 1 and 2 the shelf 8 is suitably sufficiently low and of such length that it will abut the ground to prevent excessive forward tilting of the push-chair. The shelf 8 may further serve the role of preventing the child's feet from dragging on the ground to compensate for the loss of legs supporting the chair to the axle 3 and wheels 2, 2'.

Excessive rearward tilting of the chair is prevented by a pair of stabiliser legs 9, 9', each extending rearwardly of a respective rod 5, 5' of the handle stem 4. These legs 9, 9' are suitably of such length that rearward tilting of the push-chair more than 10 degrees beyond the operational angle of tilt is prevented.

Subsidiary wheels 10, 10' are provided on the respective free ends of the legs 9, 9'. These wheels 10, 10' are of particular use in enabling the push-chair main wheels 2, 2' to be raised temporarily from ground contact and the push-chair moved forwardly to climb over a high pavement kerb, for example.

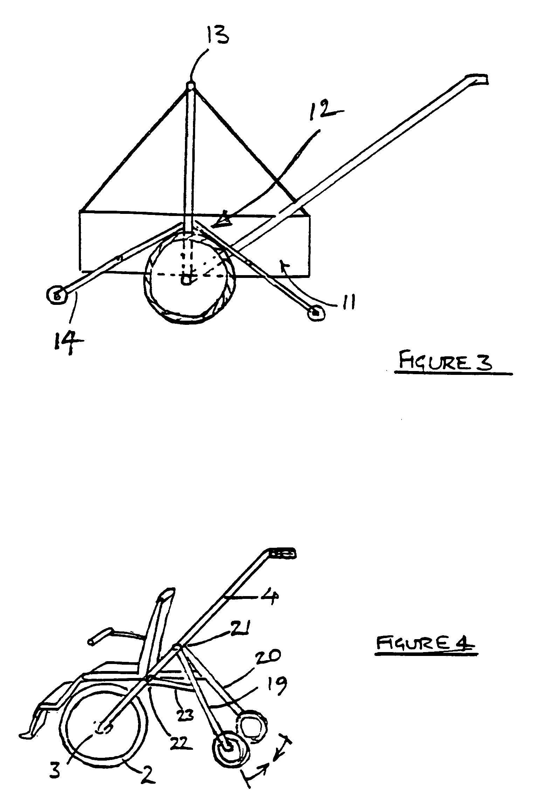

Referring now to Figure 3, an alternative embodiment of the invention is shown wherein a specialized "seat" 11 is shown mounted to the frame 12 of the push-chair. The seat 11 is formed as a cradle structure pivotally hung upon a support bar 13 forming part of the frame 12. The mounting of the bar 13 to the frame 12 is articulated such that the centre of gravity of the cradle 11 may be shifted relative to the axle 3. The frame 12 is fully collapsible and further comprises wheeled collapsible stabilizing legs 14 at front and rear.

The cradle/seat 11 may be pivoted to the bar 13 and have a damper such as to allow rocking thereof substantially only when the push-chair is stationary.

A wide range of alternative seat structures may be used in association with the frame. In one preferred example the seat structure may comprise a cocoon or a high-sided tub.

Where the seat structure comprises a tub this may be a broadly dustbin-shaped plastics moulding in to which the child is placed. One form of tub is illustrated in Figures 8-10. The tub may be partially collapsible, having a hinged or telescoping region to facilitate storage of the push-chair. Suitably a hatch is provided in the upper, in use, region of the tub to assist entry and exist of the child. The tub may have an internal ledge for a seat and/or two downward tubular projections into which the child's legs may be inserted. Where a ledge is provided this may be height-adjustable and may be mounted to the frame by a gas strut or similar sprung arrangement for adjusting the height. This may serve a further shock-absorbing role. Alternatively the tub itself may be height-adjustable on the frame. The tub provides the function of a seat with the added benefit of giving protection to the child and may be adapted to increase enjoyment of the experience by the child by, for example, marking the tubs or shaping them to resemble cartoon characters or having other themes.

The provision of a tub having a pair of independent downward projections would enable the child to comfortably straddle a one-wheeled variant of the proposed improved push-chair or a variant with the two main co-axially mounted wheels placed closely side by side. A similar arrangement could be achieved through use of a cycle seat with a handle bar and/or a constraining cage structure, such as for example a hoop, provided for security of the child. Where a hoop is provided this may be hinged to the handle shaft of the push-chair to swivel to lie within a vertical plane when not required.

If desired the pushchair may be a two-seater, having, for example, a pair of tandem arranged tubs. The rear tub may be fitted behind the handle shaft of the pushchair. (see Figure 8)

Whereas the above-mentioned illustrated embodiments show the push-chair to have a pair of wheels 2, 2' mounted on a single axle 3 the arrangement may comprise two or more wheels mounted on a series of co-axially aligned axles 3. The push-chair could even have a single wheel 2 which might, for example, be a ball-shaped wheel or a roller or a pair of wheels so close as to act as a roller. Where a single-wheeled configuration is used lateral stabilisers will be advisable. Where the seat is formed as a tub the wheel or wheels may be mounted to the base of the tub.

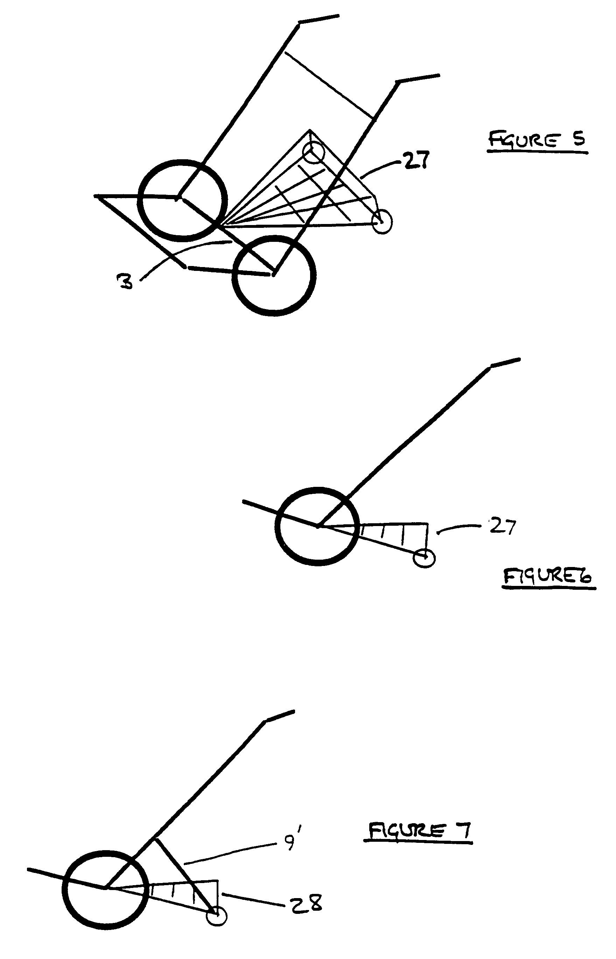

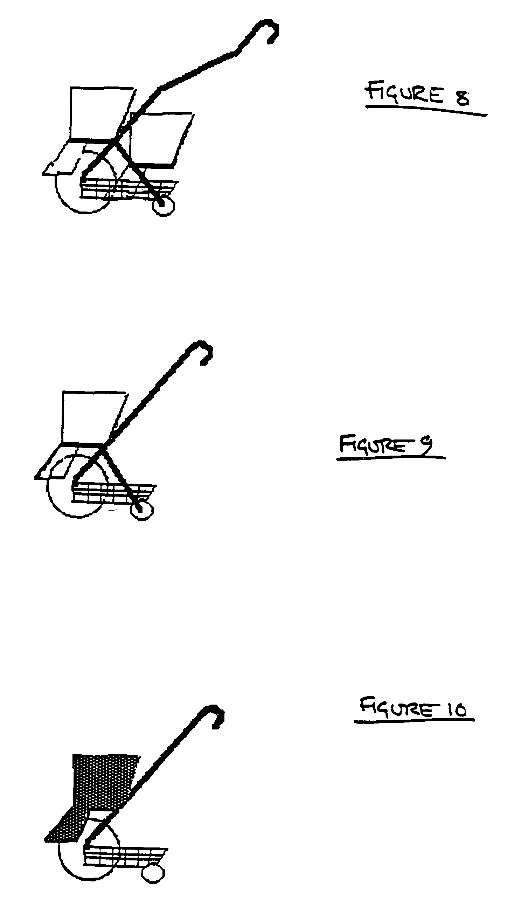

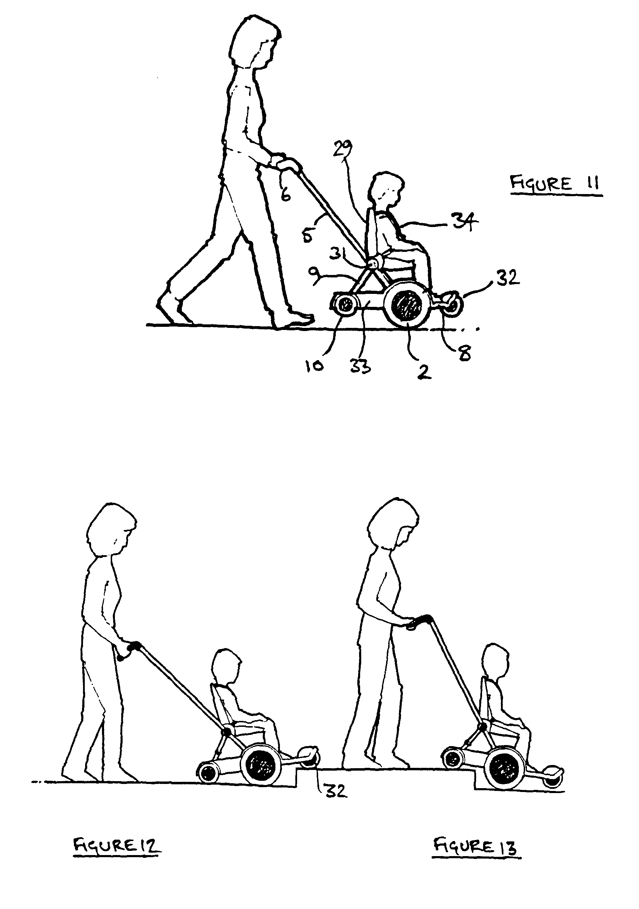

Referring to Figure 4, there is shown a single wheeled variant having a single main wheel 2 mounted on an axle 3. The frame of the push-chair has a handle shaft 4 to which a pair of wheeled stabiliser legs 19, 20 are hingedly attached 21, 22. Each leg 19, 20 is further held to the shaft 4 by a respective strengthening strut 23, 23', hinged to the shaft 4 to allow the legs 19, 20 to be splayed, in use, and closed together for storage. In a further alternative embodiment the legs 10, 20 may be fixed splayed apart and the main wheel 2 hinged to the shaft 4 to turn when folding for storage such that the main wheel 2 extends transversely of the axis of forward motion of the push-chair thereby reducing the front-to-rear dimension of the push-chair. The push-chair may be arranged for a variety of degrees of articulation to allow it to be folded flat for storage. In the Figure 4 embodiment the legs 19, 20 may be hinged to fold downwardly to lie flat on top of the main wheel 2.

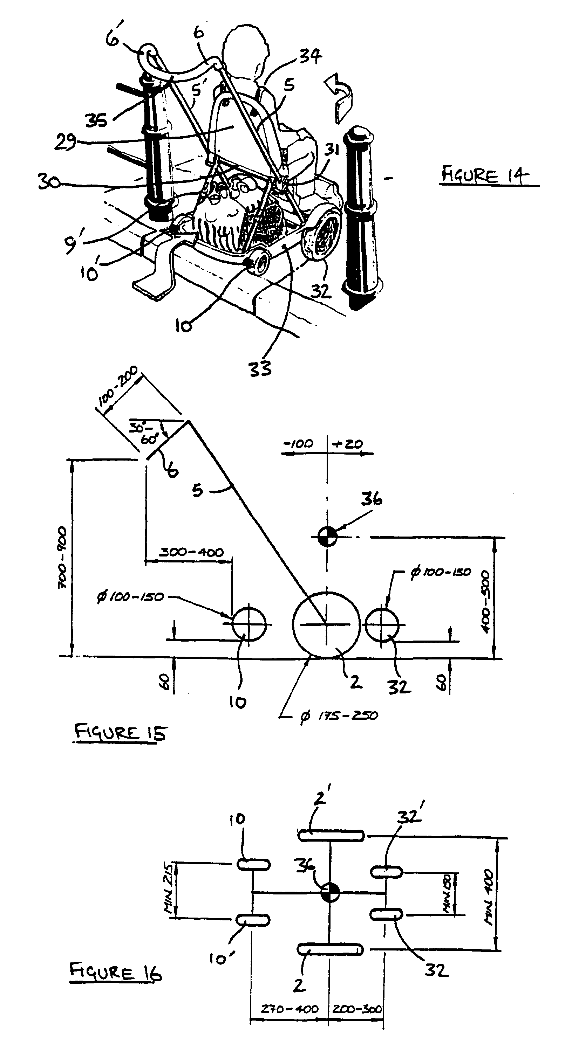

In a further development of the present invention the push-chair may be adapted to provide a facility for carrying shopping or other goods. Referring to Figures 5, 6 and 7, there is shown a trailer 27 which is triangular in plan and hinged substantially centrally along the main axle 3 of push-chair. This trailer 27 may swing to follow movement of the push-chair as it is steered along. The trailer 27 may be further articulated to the axle 3 to swing vertically to be stowed fastened to the handle shaft when not required. The rearward apices of the trailer 27 are suitably provided with subsidiary wheels.

A non-trailing rear carrier is illustrated in Figure 7 in which carrier 28 is supported by struts 9, 9' the carrier 28 being hinged to stow against the handle shaft. In a further adaptation of the trailer 27 or carrier 28 this may be provided as a collapsible pouch which opens as the trailer 27/carrier 28 is lowered to the ground from its storage position against the handle shaft.

Turning now to Figures 11 to 14, there is shown a particularly preferred embodiment which comprises a frame broadly falling within the schematic representation of Figures 1 and 2, with like parts having similar reference numerals. The Figures 11 to 14 embodiment is provided with a seat 29 mounted via adjustable connectors 31, 31' to the respective rods 5, 5' of the frame and having a strut 30 extending there between.

Both front and rear stabilizers are provided. The rear stabilizer comprises a pair of struts 9, 9' to the respective ends of which are mounted wheels 10, 10'.

A tray 33 lies between, and may even provide a chassis inter-connecting, the rear stabilizer wheels 10, 10' and the main load-bearing wheels 2, 2'. This tray 33 may carry provisions as illustrated in Figure 14.

A forward extension 8 of the tray 33 forms the footrest of the push-chair.

Mounted near to the footrest 8 of the push-chair is a front stabilizer comprising a roller 32 extending transversely of the push-chair substantially the whole of its width and which serves, especially, as a means for levering the push-chair up a kerb as illustrated in Figure 12. The action of demounting from a pavement kerb is illustrated in Figure 13.

For normal horizontal forward travel the illustrated push-chair suitably rests on the main load-bearing wheels 2, 2' and also the rear stabilizer wheels 10, 10'. When it is desired to traverse rough or loose ground or to turn the push-chair it is suitably tilted slightly forwardly so as to balance upon the two main load-bearing wheels 2, 2'. The rear stabilizing wheels 10, 10' and the front roller 32 are then clear of the ground enabling the push-chair to be swivelled with ease. The rear stabilizer wheels and front roller 32 have sufficient ground clearance when the push-chair is balanced on the main load-bearing wheels 2, 2' to facilitate travel over undulating terrain. When tilted backwardly sufficient clearance is allowed to enable mounting of high kerbs.

Suitable parameters for ground clearance, stability and good weight distribution for ease of operation are indicated in Figures 15 and 16. These are, however, not to be taken as the only parameters which would fulfil the requirements of the present invention. All dimension ranges given are in millimetres. Diameters of wheels are indicated by the symbol *φ* The centre of gravity is indicated by reference 36. If a strict interpretation of BS7409 is taken the parameters for fore-aft positioning of the centre of gravity may need to be limited to within 25 and 100 mm aft of the axle.

As an aid to levering the push-chair over obstructions such as kerbs and to exploit the different angles of tilt of the push-chair to the maximum, the handles 6, 6' are suitably joined towards their rear ends by an intermediate length 35 providing a second grip position. This may be further augmented by further handle extensions, where appropriate. If desired, the handle may be telescopically extensible.

Although described above with respect to certain specified embodiments, numerous alternative embodiments are conceivable within the scope of the invention. For example, although the seat is in all cases shown to face forwardly, it may be configured to face rearwardly.

## Claims

1. A push-chair for infants which comprises:
a frame (1), having a seat (29) for a child, substantially rigidly mounted on one or more main load-bearing wheels (2, 2'), in use, the or each said main wheel being mounted rollably to a primary axle (3), the push-chair being adapted such that the centre of gravity of the occupied push-chair lies substantially over said primary axle, at least during horizontal travel when the child occupant remains seated substantially upright, and the push-chair having one or more front and/or rear stabilisers (8, 9, 9') to prevent over-tilting of the push-chair about the said primary axle the seat being positioned or positionable to face forwardly in the direction of travel, the push chair having a handle stem (5, 5') extending rearwardly in use and when at rest, the handlestem having one or more handle grips for gripping by the operator with their two hands spaced widely apart, **characterised in that** the or each said main wheel may alternatively by mounted to a coaxial series of axles extending transversely of the push-chair, and **in that** the or each said front and/or rear stabilisers has a secondary axle or coaxial series of axles with one or more wheels or rollers (10, 32) thereon, and the stabiliser(s) and the axle(s) and wheels or rollers of the stabiliser(s) are adapted to enable the push-chair to be pivoted about said secondary axle(s) of the or each stabiliser thereby to climb a kerb.

2. A push-chair as claimed in Claim 1, wherein the front stabiliser (8) has said one or more wheels or rollers (32, 32') thereon.

3. A push-chair as claimed in Claim 2, wherein the rear stabiliser (9, 9') also has said one or more wheels or rollers (10, 10') thereon.

4. A push-chair as claimed in Claim 1, 2 or 3, wherein the main wheels (2, 2') of the push-chair have a diameter, including thickness of tyre where present, greater than 15 centimetres.

5. A push-chair as claimed in any preceding Claim, wherein the handle stem (5, 5') extends substantially radially relative to the primary axle or series of axles (3).

6. A push-chair as claimed in Claim 5, wherein an inner angle greater than 120° is subtended between the base of the seat (29) and the handle stem (5, 5').

7. A push-chair as claimed in any preceding Claim having a trailer hingedly mounted to the main axle (3) of the push-chair or to the handle shaft (5, 5').

8. A push-chair as claimed in any preceding Claim having a seat formed as a tub to substantially enclose at least the lower body of a push-chair occupant.

## Patentansprüche

1. Kindersportwagen, der aufweist:
einen Rahmen (1) mit einem Sitz (29) für ein Kind, im wesentlichen starr auf ein oder mehrere tragende Haupträder (2, 2') beim Gebrauch montiert, wobei das oder ein jedes Hauptrad rollbar an einer Hauptachse (3) montiert ist, wobei der Kindersportwagen so ausgeführt ist, daß der Schwerpunkt des besetzten Kinderwagens im wesentlichen über der Hauptachse liegt, mindestens während einer horizontalen Bewegung, wenn das darin befindliche Kind im wesentlichen aufrecht sitzend bleibt, und wobei der Kindersportwagen einen oder mehrere vordere und/oder hintere Stabilisatoren (8, 9, 9') aufweist, um ein Überkippen des Kindersportwagens um die Hauptachse zu verhindern, wobei der Sitz so positioniert oder positionierbar ist, daß er nach vom hin in der Bewegungsrichtung liegt, wobei der Kindersportwagen eine Griffstange (5, 5') aufweist, die sich beim Gebrauch nach hinten erstreckt, und wobei die Griffstange, wenn er sich im Ruhezustand befindet, einen oder mehrere Handgriffe für das Ergreifen durch den Benutzer aufweist, wobei seine zwei Hände weit auseinander mit Abstand angeordnet werden, **dadurch gekennzeichnet, daß** das oder jedes Hauptrad alternativ auf eine koaxiale Reihe von Achsen montiert werden kann, die sich quer zum Kindersportwagen erstrecken; und dadurch, daß der oder jeder vordere und/oder hintere Stabilisator eine Nebenachse oder koaxiale Reihe von Achsen mit einem oder mehreren Rädern oder Rollen (10, 32) darauf aufweist und der Stabilisator (die Stabilisatoren) und die Achse(n) und die Räder oder Rollen des Stabilisators (der Stabilisatoren) so ausgeführt sind, daß sie ermöglichen, daß der Kindersportwagen um die Nebenachse(n) des oder eines jeden Stabilisators herum gedreht werden kann, um dadurch eine Bordsteinkante hinaufzukommen.

2. Kindersportwagen nach Anspruch 1, bei dem der vordere Stabilisator (8) ein oder mehrere Räder oder Rollen (32, 32') darauf aufweist.

3. Kindesportwagen nach Anspruch 2, bei dem der hintere Stabilisator (9, 9') ebenfalls ein oder mehrere Räder oder Rollen (10,10') darauf aufweist.

4. Kindersportwagen nach Anspruch 1, 2 oder 3, bei dem die Haupträder (2, 2') des Kindersportwagens einen Durchmesser, einschließlich der Dicke des Reifens, wo vorhanden, aufweisen, der größer ist als 15 cm.

5. Kindersportwagen nach vorhergehenden Ansprüchen, bei dem sich die Griffstange (5, 5') im wesentlichen radial relativ zur Hauptachse oder Reihe der Achsen (3) erstreckt.

6. Kindersportwagen nach Anspruch 5, bei dem sich ein Innenwinkel von mehr als 120° zwischen dem Unterbau des Sitzes (29) und der Griffstange (5, 5') erstreckt.

7. Kindersportwagen nach vorhergehenden Ansprüchen, der einen Anhänger aufweist, der gelenkig an der Hauptachse (3) des Kindersportwagens oder an der Griffwelle (5,5') montiert ist.

8. Kindersportwagen nach vorhergehenden Ansprüchen, der einen Sitz aufweist, der als eine Wanne ausgebildet ist, um im wesentlichen mindestens den unteren Körper des Insassen des Kindersportwagens zu umgeben.

## Revendications

1. Poussette pour enfant comprenant:
un châssis (1), comportant un siège (29) pour un enfant, monté de façon pratiquement rigide sur une ou plusieurs roues de support de charge principales (2, 2'), la ou chaque dite roue principale étant montée en service par roulement sur un essieu primaire (3), la poussette étant conçue de sorte que le centre de gravité de la poussette occupée se situe pratiquement au-dessus dudit essieu primaire, au moins pendant le déplacement horizontal, lorsque l'enfant reste assis dans une position pratiquement droite, la poussette comportant un ou plusieurs stabilisateurs avant et/ou arrière (8, 9, 9') pour empêcher un basculement de la poussette autour dudit essieu primaire, le siège étant positionné ou pouvant être positionné de sorte à être orienté vers l'avant dans la direction du déplacement, la poussette comportant un manche à poignée (5, 5') s'étendant vers l'arrière en service et à l'arrêt, le manche à poignée comportant une ou plusieurs positions de saisie de la poignée destinées à être saisies par l'opérateur avec les deux mains largement écartées, **caractérisée en ce que** la ou chaque dite roue principale peut alternativement être montée sur une série coaxiale d'essieux s'étendant transversalement à la poussette et **en ce que** le ou chaque dit stabilisateur avant et/ou arrière comporte un essieu secondaire ou une série coaxiale d'essieux avec une ou plusieurs roues ou roulettes (10, 32), le (les) stabilisateurs) et l'essieu (les essieux) et les roues ou les roulettes du (des) stabilisateur(s) étant destinés à permettre le pivotement de la poussette autour dudit (desdits) essieu(x) secondaire(s) du ou de chaque stabilisateur pour monter sur un trottoir.

2. Poussette selon la revendication 1, dans laquelle le stabilisateur avant (8) comporte ladite une ou plusieurs roues ou roulettes (32, 32').

3. Poussette selon la revendication 2, dans laquelle le stabilisateur arrière (9, 9') comporte aussi ladite une ou plusieurs roues ou roulettes (10, 10').

4. Poussette selon les revendications 1, 2 ou 3, dans laquelle les roues principales (2, 2') de la poussette ont un diamètre, englobant l'épaisseur du pneumatique, s'il y en a un, supérieur à 15 centimètres.

5. Poussette selon l'une quelconque des revendications précédentes, dans laquelle le manche à poignée (5, 5') s'étend de manière pratiquement radiale par rapport à l'essieu primaire ou à la série d'essieux (3).

6. Poussette selon la revendication 5, dans laquelle un angle interne supérieur à 120° est fonné entre la base du siège (29) et le manche à poignée (5, 5').

7. Poussette selon l'une quelconque des revendications précédentes, comportant une remorque montée par articulation sur l'essieu principal (3) de la poussette ou sur le manche à poignée (5, 5').

8. Poussette selon l'une quelconque des revendications précédentes, comportant un siège en forme de baquet pour renfermer pratiquement au moins la partie inférieure du corps d'un occupant de la poussette.
